Europäisches Patentamt

(19) European Patent Office        (11) Publication number: **0 022 684**

Office européen des brevets        **B1**

(12)            EUROPEAN PATENT SPECIFICATION

(45) Date of publication of patent specification: **18.01.84**        (51) Int. Cl.³: **B 60 T 11/16**

(21) Application number: **80400820.9**

(22) Date of filing: **06.06.80**

(54) Fast-fill master cylinder.

(30) Priority: **02.07.79 US 54366**

(43) Date of publication of application:
**21.01.81 Bulletin 81/3**

(45) Publication of the grant of the patent:
**18.01.84 Bulletin 84/3**

(84) Designated Contracting States:
**DE FR GB IT**

(56) References cited:
**DE - A - 2 147 062**
**DE - A - 2 430 167**
**DE - A - 2 816 359**
**GB - A - 2 000 235**

(73) Proprietor: **THE BENDIX CORPORATION**
**Executive Offices Bendix Center**
**Southfield Michigan 48037 (US)**

(72) Inventor: **Lohraff, Larry Gene**
**R No 2, Box 561-D Tudor Road**
**Berrien Springs Michigan 49103 (US)**
Inventor: **Martinic, Jack**
**818 N. Adams St.**
**South Bend Indiana 46628 (US)**
Inventor: **Crumb, Donald Arthur**
**R No3, Box 425**
**South Haven Michigan 49090 (US)**

(74) Representative: **Huchet, André et al,**
**Service Brevets Bendix 44, rue François 1er**
**F-75008 Paris (FR)**

Fast-fill master cylinder

The present invention relates to an improvement in fast-fill master cylinders, particularly for use in braking systems for automotive vehicles.

In a fast-fill or two stage master cylinder is usually provided a stepped bore within a housing to define a large diameter portion and a small diameter portion. A primary piston is movably disposed within both portions and a secondary piston may be movably disposed within the small diameter portion. The primary piston defines a fast-fill chamber in the large diameter portion so that during a brake application fluid pressure is generated in the fast-fill chamber and communicated to a primary chamber. Consequently, fluid pressure in the primary chamber is rapidly increased during initial braking to take up larger than normal running clearances in a brake assembly. When the pressure level within the primary of fast-fill chamber reaches a predetermined value, a valve assembly is operable to communicate the fast-fill chamber to the reservoir so that the piston will generate fluid pressure for communication to the brake assembly only with the small diameter portion.

During the transition from generating fluid pressure for braking within both diameter portions to generating fluid pressure for braking within only the small diameter portion, a transition bump is usually felt by a vehicle operator. The transition bump is manifested by rapid travel of a brake pedal through a small distance without any corresponding increase in braking. Consequently, the vehicle operator feels an undesirable bump during a brake application, rather than feeling a smooth increase in braking force.

To eliminate or at least reduce the above defined transition bump as the fast-fill chamber is vented to the reservoir, GB—A—2 000 235 teaches the use of a separate control valve which is responsive to the fluid pressure being generated in the primary chamber for progressively opening the communication between the fast-fill chamber and the reservoir. While operating satisfactorily, this known device is bulky and adds substantial cost to the manufacture of the fast-fill master cylinder.

It is, therefore, an essential object of the present invention to solve the problem of eliminating the above defined transition bump in a more simple and less expensive way than taught in GB—A—2 000 235.

This object is achieved in the known fast-fill master cylinder above of the kind comprising a housing in which is defined a stepped bore with a large diameter section and a small diameter section, at least one piston slidably disposed within said stepped bore and carrying a first seal engaging the large diameter section and a second seal engaging the small diameter section, said piston defining a fast-fill chamber with the large diameter section and primary chamber with the small diameter section, a reservoir communicating fluid to both of said chambers via first fluid passage and second fluid passage, respectively, when the piston is in a rest position, passage means for communicating said fast-fill chamber to said primary chamber as long as the fluid pressure built up in the former as a result from the motion of the piston does not reach a predetermined level, and valve means for venting said fast-fill chamber to said reservoir via said first fluid passage when the fluid pressure in the former exceeds said predetermined level, thanks to the fact that according to the invention, the piston cooperates with the small diameter section of the stepped bore and with said second fluid passage to define a metering valve device which provides for gradual communication of fluid pressure from the fast-fill chamber to the reservoir via said second fluid passage after said piston has moved an initial travel which spaces said metering valve device from said fluid passage and corresponds to a first stage of brake application.

In a preferred embodiment of the invention, the metering valve device comprises a metering land with a tapered end formed on the piston adjacent the second seal, and this metering land cooperates with the small diameter section of the stepped bore and with a port formed therein as a second fluid passage to gradually communicate the fast-fill chamber to the reservoir after said metering land has moved past said port. The metering land is further provided with axially extending passages leading to an inner peripheral portion of the second seal for communicating the fast-fill chamber to the primary chamber during said first stage of brake application. These passages, however, perform their above defined function independently of the metering valve device, as it will be shown in the subsequent description.

These and other advantageous features of the invention will become more readily apparent from reading the following description of a preferred embodiment, given by way of example only, and with reference to the accompanying drawings, in which:

Figure 1 is a cross-sectional view of a fast-fill master cylinder constructed in accordance with the teachings of the present invention; and

Figure 2 is an enlarged view of the encircled portion of figure 1.

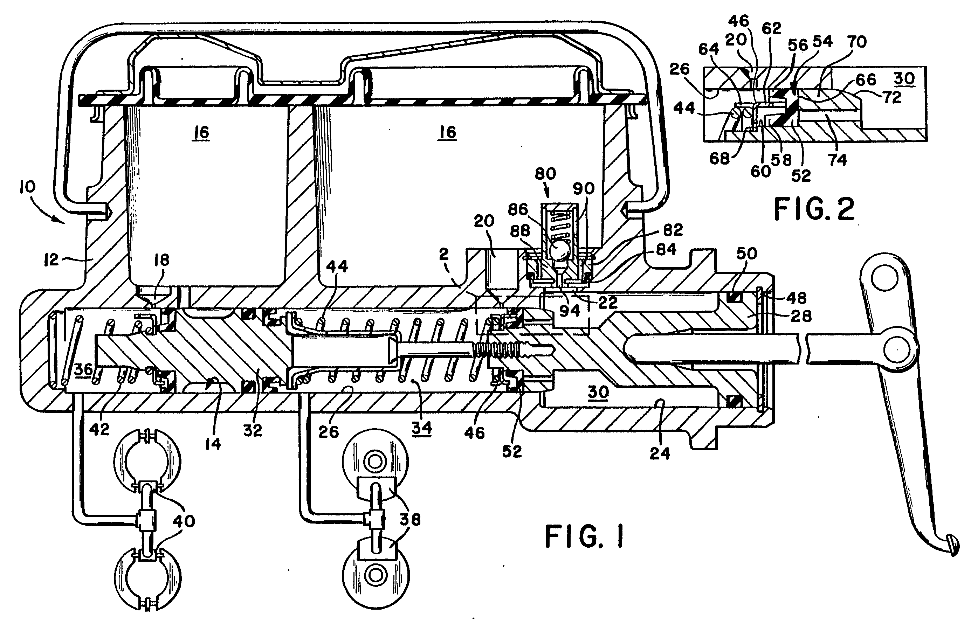

Referring to Figure 1, a fast-fill master cylinder 10 includes a housing 12 with a stepped bore 14 and a split reservoir 16. Ports 18, 20 and 22 provide for communication of fluid from the split reservoir 16 to the stepped bore 14. The stepped bore 14 defines a large diameter portion 24 and a small diameter portion 26. A primary piston 28 is movably disposed within the larger diameter and small diameter portions to substantially define a variable volume fast-fill chamber 30. The primary piston cooperates with a secondary piston 32 to form a variable volume primary chamber 34 and the secondary piston cooperates with the housing 12 to form a variable volume secondary chamber 36. The primary and secondary chambers communicate with respective brake assemblies 38 and 40 in a manner well known in the art.

A first spring 42 biases the piston 32 to the right and a second spring 44 extends from the piston 32 to a retainer 46 to bias the piston 28 to abut a snap ring 48, thereby defining a non-braking position for the piston 28. The piston 28 carries a first seal 50 and a second seal 52, the seal 50 engaging the large diameter bore portion 24 and the seal 52 engaging the small diameter bore portion 26.

Turning to Figure 2, the primary piston 28 forms a recess at 54 for receiving the seal 52. The seal includes a radial outer lip 56 engageable with the bore 26 and a radial inner lip 58 engageable with an axially extending shoulder 60 of recess 54. The retainer 46 is deformed to provide an axially extending leg 62 engageable with the seal 52 and a leg 64. The leg 64 forms a spring rest for spring 44 while the leg 62 biases the seal in fluid-tight engagement with a radially extending shoulder 66 of recess 54. The retainer abuts a shoulder 68 on the primary piston 28 to limit the compression of seal 52 by the leg 62.

The primary piston 28 includes a metering land 70 having a tapered end 72 leading to the fast-fill chamber 30. The metering land diameter adjacent seal 52 is slightly less than the diameter of small bore portion 26 so that the metering land substantially restricts fluid communication between the fast-fill chamber and port 20 when this metering land is disposed to the right of port 20 as shown.

In order to communicate fluid pressure from the fast-fill chamber to the primary chamber the piston includes a plurality of passages 74 which extend through the metering land 70. The passage 74 illustrated in Figure 2 leads from the fast-fill chamber 30 to the seal 52 at a location radially aligned with the inner lip 58 of seal 52, so that the seal 52 is in fluid-tight engagement with the shoulder 66 to substantially seal the passage 74.

A valve assembly 80 is disposed within a bore 82 leading to port 22. The valve assembly 80 includes a flap valve element 84 and a ball valve element 86. A body 88 supports the elements and includes passages 90 to communicate the reservoir 16 with the elements. When the pressure within the fast-fill chamber 30 is less than the pressure within the reservoir 16, the flap valve element is pressure responsive to open communication between the reservoir and fast-fill chamber 30 via passages 90. If the fluid pressure within fast-fill chamber 30 is increased above a predetermined level, as controlled by the spring constant of a spring engaging ball valve element 86, the ball valve element 86 is exposed to the pressure within fast-fill chamber 30 via restricted orifice 94 to open communication between chamber 30 and reservoir 16 via this restricted orifice 94.

The above described fast-fill master cylinder operates as follows:

During a brake application, the primary piston 28 is moved to the left to contract the volume of fast-fill chamber 30 and primary chamber 34. The contraction of chamber 30 increases the fluid pressure therein to communicate the same to the primary chamber 34 via passage 74 and lifted lip 58 of seal 52. When the lip 56 passes port 20, the fluid trapped in the primary chamber 34 is pressurized to communicate fluid pressure to brake assembly 38 and also to move the secondary piston 32. In a wellknown manner the secondary chamber 36 is pressurized when the secondary piston closes port 18 to communicate fluid pressure to the brake assembly 40.

During a first stage of braking, when the lip 56 closes the port 20 and tapered end 72 is spaced from the port 20, fluid pressure developed in fast-fill chamber 30 is communicated to the primary chamber 34 to rapidly increase fluid pressure therein. During a second stage of braking, when the metering land is aligned with the port 20, a portion of the fluid pressure developed in the fast-fill chamber is communicated to the reservoir 16 via the tapered end 72 of metering land 70 and port 20. As the metering land 70 continues to move past the port 20, the restriction to communication between the fast-fill chamber and the reservoir is reduced, so that the fluid pressure in the fast-fill chamber is gradually reduced. In other words, the blend back of fluid from the fast-fill chamber to the reservoir is gradual rather than instantaneous. The fluid pressure within the fast-fill chamber is gradually blended back to the reservoir until the tapered end 72 moves past the port 20 whereupon substantially unrestricted fluid communication is established between the reservoir and the fast-fill chamber. The lip 58 of seal 52 permits fluid communication from the fast-fill chamber 30 to the primary chamber 34 but prevents fluid communication in the opposite direction.

If a vehicle operator applies an abnormally high initial force during braking and the sudden increase in fluid pressure within the fast-fill chamber reaches the predetermined value, the valve 80 is pressure responsive to open communication between the fast-fill chamber and the reservoir. When the fluid pressure is decreased to a level below the predetermined value, the valve 80 closes to enable further increasing fluid pressure within the fast-fill chamber to be communicated to the primary chamber 34.

Upon termination of braking, the springs 42 and 44 act against the pistons 28 and 32 to return the same to their rest positions. As the primary piston moves to the right, the volume of fast-fill chamber 30 is increased. Initially upon termination of braking, fluid from the reservoir 16 is communicated to the expanding fast-fill chamber 30 via port 20 as the metering land is positioned to the left of port 20. When the metering land and seal return to a position to the right of port 20, the expanding fast-fill chamber creates a suction pressure to open flap valve 84. The flap valve 84 is maintained open until the primary piston 28 abuts snap ring 48 in order to fill the fast-fill chamber with fluid.

### Claims

1. A fast-fill master cylinder of the kind comprising a housing in which is defined a stepped bore (14) with a large diameter section (24) and a small diameter section (26), at least one piston (28) slidably disposed within said stepped bore and carrying a first seal (50) engaging the large diameter section and a second seal (52) engaging the small diameter section, said piston defining a fast-fill chamber (30) with the large diameter section and a primary chamber (34) with the small diameter section, a reservoir (16) communicating fluid to both of said chambers via first fluid passage (22, 90) and second fluid passage (20) respectively when the piston is in a rest position, passage means (74) for communicating said fast-fill chamber to said primary chamber as long as the fluid pressure built up in the former as a result from the motion of the piston does not reach a predetermined level, and valve means (80) for venting said fast-fill chamber to said reservoir via said first fluid passage (22, 90) when the fluid pressure in the former exceeds said predetermined level, characterized in that the piston (28) cooperates with the small diameter section (26) of the stepped bore and with said second fluid passage (20) to define a metering valve device (70, 72) which provides for gradual communication of fluid pressure from the fast-fill chamber (30) to the reservoir (16) via said second fluid passage (20) after said piston has moved an initial travel which spaces said metering valve device from said second fluid passage and corresponds to a first stage of brake application.

2. A fast-fill master cylinder according to claim 1, characterized in that the metering valve device comprises a metering land (70) with a tapered end (72) formed on the piston adjacent the second seal (52), said metering land cooperating with the small diameter section (26) of the stepped bore and with a portion (20) formed therein as a second fluid passage to gradually communicate the fast-fill chamber (30) to the reservoir (16) after said metering land has moved past said port.

3. A fast-fill master cylinder according to claim 2, characterized in that the metering land (70) is further provided with axially extending passages (74) leading to an inner peripheral portion (58) of the second seal (52) for communicating the fast-fill chamber (30) to the primary chamber (34) during said first stage of brake application.

4. A fast-fill master cylinder according to claims 2 or 3, characterized in that the second seal (52) is formed with a radially inner lip (58) in substantial alignment with said passages (74) and with a radially outer lip (56) in substantial alignment with the metering land (70), and in that the piston (28) further carries a retainer (46) which engages the second seal at a radial location intermediate said lips and which resiliently biases said second seal in fluid-tight engagement with said piston.

### Revendications

1. Un maître-cylindre à remplissage rapide du type comprenant un corps dans lequel est formé un alésage (14) en gradins ayant une partie (24) de grand diamètre et une partie (26) de petit diamètre, au moins un piston (28) monté coulissant dans ledit alésage en gradins et portant un premier joint d'étanchéité (50) en appui contre la partie de grand diamètre et un second joint d'étanchéité (52) en appui contre la partie de petit diamètre, ledit piston délimitant avec la partie de grand diamètre une chambre (30) de remplissage rapide et avec la partie de petit diamètre une chambre primaire (34), un réservoir (16) transmettant du fluide auxdites deux chambres par l'intermédiaire d'un premier passage (22, 90) à fluide et d'un second passage (20) à fluide, respectivement, lorsque le piston est dans une position de repos, des moyens de passage (74) pour faire communiquer ladite chambre de remplissage rapide avec ladite chambre primaire tant que la pression de fluide engendrée dans la première par suite du mouvement du piston n'atteint pas un niveau prédéterminé, et des moyens formant valve (80) pour évacuer ladite chambre de remplissage rapide audit réservoir par l'intermédiaire du premier passage (24, 90) à fluide lorsque la pression de fluide régnant dans la première dépasse ledit niveau prédéterminé, caractérisé en ce que le piston (28) coopère avec la partie (26) de petit diamètre de l'alésage en gradins et avec ledit second passage (20) à fluide pour former un dispositif de valve de dosage (70, 72) qui assure la communication progressive de la pression de fluide de la chambre (30) de remplissage rapide au réservoir (16) par l'intermédiaire dudit second passage (20) à fluide, après que ledit piston s'est déplacé sur une course initiale qui sépare ledit dispositif de valve de dosage dudit passage à fluide et correspond à une première étape de serrage des freins.

2. Un maître-cylindre à remplissage rapide selon la revendication 1, caractérisé en ce que le dispositif de valve de dosage comprend une plage de dosage (70) munie d'une extrémité chanfreinée (72) formée sur le piston au voisinage du second joint d'étanchéité (52), ladite plage de dosage coopérant avec la partie (26) de petit diamètre de l'alésage en gradins et avec un orifice (20) qui y est formé en tant qu'un second passage à fluide pour faire communiquer progressivement le chambre (30) de remplissage rapide avec le réservoir (16) aprés que la plage de dosage d'est déplacée devant ledit orifice.

3. Un maître-cylindre à remplissage rapide selon la revendication 2, caractérisé en ce que la plage de dosage (70) est, en outre, munie, de passages (74) s'étendant exialement qui aboutissent face à une partie périphérique intérieure (58) du second joint d'étanchéité (52) pour faire communiquer la chambre (30) de remplissage rapide avec la chambre primaire (34) pendant la première étape du serrage des freins.

4. Un maître-cylindre à remplissage rapide selon la revendication 2 ou 3, caractérisé en ce que ledit second joint d'étanchéité (52) est muni d'une lèvre (58) radialement intérieure sensiblement alignée avec lesdits passages (74) et d'une lèvre (56) radialement extérieure sensiblement alignée avec la plage de dosage (70) et en ce que le piston (28) porte, en outre, un organe de retenue (46) qui est en appui contre le second joint d'étanchéité à un emplacement radial intermédiaire entre lesdits lèvres et qui sollicite élastiquement ledit second joint d'étanchéité en appui étanche aux fluides contre ledit piston.

**Patentansprüche**

1. Schnellfüllender Hauptzylinder, bestehend aus einem Gehäuse, aus einer abgestuften Bohrung (14) mit einem Bohrungsabschnitt (24) mit großem und einem Bohrungsabschnitt (26) mit kleinen Durchmesser, aus mindestens einem in der Bohrung verschiebbaren Kolben (28) mit einer an dem großen Bohrungsabschnitt anliegenden ersten Dichtung (50) und einer an dem kleinen Bohrungsabschnitt anliegenden zweiten Dichtung (52), wobei der Kolben eine schnellfüllende Kammer (30) in dem großen Bohrungsabschnitt und eine Hauptkammer (34) in dem kleinen Bohrungsabschnitt abteilt, sowie aus einem mit beiden Kammern über einen ersten Durchgang (22, 90) und zweiten Durchgang (20) bei Ruhelage des Kolbens verbundenen Reservoir (16), aus einem Durchgang (74) zum Verbinden der schnellfüllenden Kammer mit der Hauptkammer, solange der in der ersteren infolge der Kolbenbewegung aufgebaute Druck einen Vorbestimmten Wert nicht erreicht, und aus einer Ventileinrichtung (80) zum Entlüften der schnellfüllenden Kammer zum Reservoir über den ersten Durchgang (22, 90), wenn der Druck in der ersteren den vorbestimmten Wert überschreitet, dadurch gekennzeichnet, daß der Kolben (28) mit dem kleinen Bohrungsabschnitt (26) der abgestuften Bohrung und mit dem zweiten Durchgang (20) zusammenwirkt, um eine Dosierventil (7, 72) zu bilden, das eine allmähliche Druckverbindung von der schnellfüllenden Kammer (30) zum Reservoir (16) über den zweiten Durchgang (20) schafft, nachdem der Kolben einen Anfangshub ausgeführt hat, mit dem das Dosierventil von dem zweiten Durchgang einen Abstand erhält und der einer ersten Bremsstufe entspricht.

2. Schnellfüllender Hauptzylinder nach Anspruch 1, dadurch gekennzeichnet, daß das Dosierventil einen Steuerbund (70) mit einem sich verjüngenden Ende (72) aufweist, der am Kolben neben der zweiten Dichtung (52) ausgebildet ist, wobei der Steuerbund mit dem kleinen Bohrungsabschnitt (26) und mit einem Kanal (20) in der Bohrung zusammenwirkt, um die schnellfüllende Kammer (30) allmählich mit dem Reservoir (16) zu verbinden, wenn der Steuerbund über den Kanal bewegt wird.

3. Schnellfüllender Hauptzylinder nach Anspruch 2, dadurch gekennzeichnet, daß der Steuerbund (70) mit axial verlaufenden Kanälen (74) versehen ist, die zu einem inneren Umfangabschnitt (58) der zweiten Dichtung (52) führen, um die schnellfüllende Kammer (30) während der ersten Bremsstufe mit der Hauptkammer (34) zu verbinden.

4. Schnellfüllender Hauptzylinder nach den Ansprüchen 2 oder 3, dadurch gekennzeichnet, daß die zweite Dichtung (52) eine radial innere Lippe (58) in Ausrichtung mit den Kanälen (74) und eine radial äußere Lippe (56) in Ausrichtung mit dem Steuerbund (70) aufweist und daß der Kolben (28) einen Halter (46) trägt, der mit der zweiten Dichtung radial zwischen den Lippen in Eingriff ist und die zweite Dichtung in einen strömungsmitteldichten Eingriff mit dem Kolben elastisch vorspannt.

FIG.2

FIG.1